# EUROPÄISCHE PATENTSCHRIFT

(11) **EP 1 191 668 B1**
(45) Veröffentlichungstag und Bekanntmachung des Hinweises auf die Patenterteilung: **02.05.2007**
(21) Anmeldenummer: 01115883.9
(22) Anmeldetag: 29.06.2001
(51) Int. Cl.: H02K 5/24

(54) **Motorlagerung zum schwingungsdämpfenden Lagern eines Elektromotors**
Vibration damping mounting for an electric motor
Support de moteur avec amortissement de vibrations

(30) Priorität: 22.09.2000 DE 10047014
(43) Veröffentlichungstag der Anmeldung: 27.03.2002
(73) Patentinhaber: AEG Hausgeräte GmbH, 90429 Nürnberg (DE)
(72) Erfinder: Eckert, Holger, 90469 Nürnberg (DE); Mack, Friedrich, 90478 Nürnberg (DE)

(56) Entgegenhaltungen:
- GB-A- 438 578
- GB-A- 658 898
- US-A- 1 764 761
- US-A- 2 078 445
- US-A- 4 553 231

## Beschreibung

Die Erfindung betrifft eine Motorlagerung zum schwingungsdämpfenden Lagern eines Elektromotors, insbesondere eines Asynchronmotors, in einer Motorhalterung.

Bei einer herkömmlichen Motorlagerung wird ein Asynchronmotor zum Antrieb der Umwälzpumpe einer Geschirrspülmaschine über Schraubenfederelemente an der Motorhalterung gelagert. Diese Lagerung über Federelemente dämpft das Pendel- bzw. Drehmoment des Asynchronmotors welches bei einer Drehzahländerung des Asynchronmotors auftritt, so daß eine Schwingungsübertragung auf die Motorhalterung und damit den Rahmen der Geschirrspülmaschine reduziert wird.

Eine weitere bekannte Lagerung einer Motor-Antriebseinheit (US-A-2,078,445) sieht vor, dass ein elektrischer Motor und ein von diesem angetriebener Kühlgerätekompressor auf einem Schlitten befestigt sind und dieser Schlitten an beiden Seiten über eine Aufhängevorrichtung an das Gehäuse des Kühlgerätes angekoppelt ist. Diese Aufhängevorrichtung umfasst dabei als Dämpfungselement ein annähernd ringförmig ausgestaltetes Zylindermantelelement, wodurch keine starre Ankopplung an das Gerätegehäuse gegeben ist, so dass auch keine Vibrationen übertragen werden können. Ferner ist durch die US-A-1,764,761 eine Motorlagerung bekannt, bei der der Motor über ein dreiarmiges Lagerkreuz an ein Basisteil angekoppelt ist, wobei jeder Lagerarm durch ein zwischengeschaltetes elastisches Kugelelement geräuschtechnisch entkoppelt ist. Schließlich zeigt und beschreibt das Dokument GB 438 578 A eine Motorlagerung, bei der der elektrische Motor vorder- und rückseitig an ein Halteblech aufgehängt und mittels je eines Haltebügels am Halteblech fixiert ist. Die stirnseitigen Aufnahmeflächen des Haltebleches bilden zusammen mit dem jeweils zugeordneten Haltebügel eine ringförmige Aufnahme für Haltestutzen des Motors aus, wobei zwischen den beiden Haltestutzen des Motors und den ringförmigen Aufnahmen der Halteanordnung annähernd ringförmig ausgebildete Zylindermantelelemente zur Geräuschentkopplung angeordnet sind.

Die Nachgiebigkeit und Dämpfung der Federelemente ist jedoch sowohl in Federachsrichtung als auch seitlich dazu gleich und damit ungerichtet. Damit erfolgt die weiche Dämpfung nicht nur in der Ebene der Pendelrichtungen des Motors bei Drehzahlwechsel, sondern ebenfalls seitlich dazu, so daß der Motor leicht aus seiner Grundstellung seitlich verschoben werden kann, was eine entsprechend flexible Anbindung des Motors an die Pumpe bzw. an die Schlauchverbindungen von und zur Pumpe erfordert.

Davon ausgehend ist es die Aufgabe der Erfindung, eine Motorlagerung zum schwingungsdämpfenden Lagern eines Elektromotors vorzuschlagen, bei der eine Einjustierung des Motors möglich ist.

Erfindungsgemäß wird diese Aufgabe mit den Merkmalen des Anspruchs 1 gelöst.

Gemäß Anspruch 1 wird zur schwingungdämpfenden Anbindung des Elektromotors an die Motorhalterung mindestens ein elastisches Zylindermantelelement vorgesehen. Das elastische Zylindermantelelement ist dabei regelmäßig aus einem Kautschuk, aus einem elastischen Kunststoffmaterial, aus einem Verbundmaterial eines elastischen Kunststoffs mit Gewebeeinlagerung oder dergleichen hergestellt.

Die Dämpfungscharakteristik des Zylindermantelelements ist dabei unterschiedlich, je nach dem, ob die Belastung senkrecht zur Außenfläche des Zylindermantelelements oder parallel zur Außenfläche des Zylindermantelelements erfolgt oder ob eine Scherung des Zylindermantels auftritt. Ist dabei die Achse des Zylindermantelelements parallel zur Drehachse des Elektromotors ausgerichtet, so werden die Pendel- bzw. Drehmomente aufgrund einer Drehzahländerung durch Zusammendrücken des Zylindermantelelements oder dessen Scherung besonders gut gedämpft, während Belastungen in Achsrichtung des Zylindermantelelements bei entsprechender Auslegung der Zylinderlänge nur zu einem geringfügigen Nachgeben des Zylindermantelelements führen. Somit wird der Motor bei einer Belastung des Motors in Drehrichtung kaum verschoben.

Soll eine Anpassung der Elastizität der Motorlagerung erreicht werden, so genügt es einfach ein Zylindermantelelement mit einer höheren oder niedrigeren Elastizität bzw. Härte einzusetzen. Damit kann eine Änderung der Dämpfung auf einfache Weise und ohne großen mechanischen Installationsaufwand erreicht werden.

Gemäß Anspruch 1 wird das Zylindermantelelement durch ein halterseitiges Stützelement und/oder ein motorseitiges Stützelement am Außenumfang des Zylindermantelelements zumindest teilweise umfaßt. Durch das Stützelement wird eine senkrecht zur Außenfläche des Zylinderelements wirkende Belastung in eine Belastung in Umfangsrichtung des Zylindermantels umgelenkt und dem Eindrücken des Zylindermantelelements entgegengewirkt. Dadurch erhöht sich die Stabilität des Zylindermantelelements soweit, daß dieses auch bei hohem Gewicht des Elektromotors mit angekoppelter Pumpe standhält.

Die Anbindung des Stützelements an das Zylindermantelelement kann dabei regelmäßig durch einfaches Auflegen des Zylindermantelelements auf das Stützelement bzw. Auflegen des Stützelements auf das Zylindermantelelement, durch Klemmung des Zylindermantelelements im Stützelement oder durch Klebverbindung oder Schraubverbindung z.B. zwischen Stützelement und Zylindermantelelement erfolgen.

Bei einer besonders vorteilhaften Ausgestaltung sind zumindest zwei halterseitige Stützelemente und zwei motorseitige Stützelemente vorgesehen, wobei jeweils ein halterseitiges und motorseitiges Stützelement auf ein Zylindermantelelement wirkt und die Außenfläche des Zylindermantelelements zwischen den Stützelementen auf beiden Seiten teilweise freiliegt.

Ist dabei der Abstand zwischen den motorseitigen Stützelementen oder zwischen den halterseitigen Stützelementen einstellbar, so erfolgt durch die Änderung des Abstandes der Stützelemente eine Verformung des Zylindermantelelements innerhalb der teilweisen Umfassung durch die Stützelemente, wobei sich durch die Verformung des Zylindermantelelements der Abstand zwischen Motormittelpunkt und Motorhalterung einstellen läßt. Damit wird eine kostengünstige Möglichkeit der Einjustierung des Motors innerhalb der Spülmaschine vorgesehen, da die ohnehin zur dämpfenden Lagerung des Motors notwendigen Teile ohne großen Materialaufwand zur Höhenjustierung verwendet werden können.

Bei einer alternativen Ausgestaltung wirkt ein halterseitiges Stützelement und ein motorseitiges Stützelement auf ein Zylindermantelelement ein, womit die oben beschriebene Änderung des Abstandes zwischen Halterung und Motormitte ebenfalls erreichbar ist.

Die Abstandsänderung zwischen Motormittelpunkt und Halterung ist dann besonders effektiv bezüglich der Änderung des Abstands zwischen den Stützelementen, wenn die Geraden, die durch die Mittelpunkte der freiliegenden Flächen des Zylindermantelelements gezogen wird, zur Richtung der Abstandsänderung der Stützelemente geneigt ist. Vorteilhafterweise beträgt der Winkel zwischen der Geraden durch die beiden zwischen den Stützelementen freiliegenden Flächen und der Richtung der Abstandsänderung 45°. Bei Verwendung von zwei Stützelementpaaren ist es vorteilhaft, wenn sich die durch die freiliegenden Bereiche gezogenen Geraden schneiden.

Neben der besseren Höhenverstellbarkeit bewirkt das versetzte Vorsehen der freiliegenden Flächen des Zylindermantelelements, daß die Elastizität gegenüber den in Umfangsrichtung um die Drehachse des Elektromotors wirkenden Pendelmomente besonders hoch ist. Bei einer besonders vorteilhaften Ausgestaltung liegen sich die freiliegenden Flächen auf einem Radius um die Drehachse des Elektromotors gegenüber. In diesem Fall tritt die elastische Scherung zur Dämpfung der Pendelbewegung lediglich über die Zylindermantelwandstärke auf.

Bei einer besonders vorteilhaften Ausgestaltung ist das elastische Zylindermantelelement ein Zylinderabschnitt eines Schlauchs, so daß das elastische Zylindermantelelement besonders kostengünstig durch Ablängen eines kommerziell als Massenware erzeugten Schlauchmaterials hergestellt werden kann.

Anhand von Figuren wird ein Ausführungsbeispiel der Erfindung erläutert.

Es zeigen:
Fig. 1 Eine schematische Seitenansicht eines Asynchronmotors, der auf zwei Schlauchabschnitten schwingungsisolierend gelagert ist, und
Fig. 2 den Asynchronmotor von Fig. 1 nach einer Höhenverstellung.

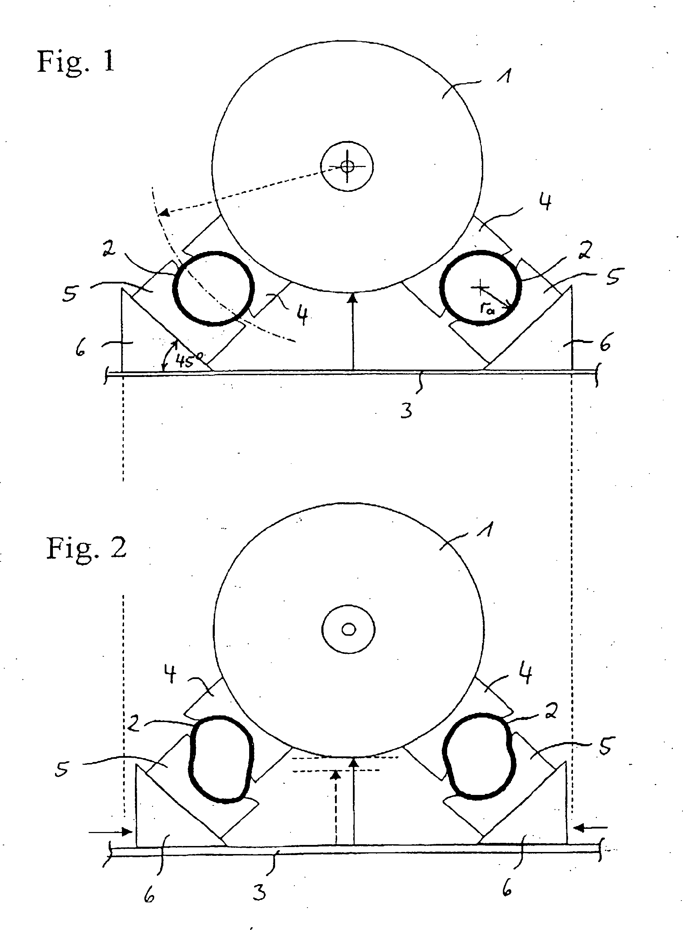

Fig. 1 zeigt einen Asynchronmotor 1, der über zwei Schlauchabschnitte 2 schwingungsisolierend in einer Motorhalterung 3 einer Geschirrspülmaschine gelagert ist. Die beiden Schlauchabschnitte 2 werden jeweils von einem motorseitigen Schalenelement 4 und einem halterseitigen Schalenelement 5 an ihrem Außenumfang teilweise umfaßt. Die Umfassung des Außenumfangs des Schlauchabschnitts 2 erfolgt dabei derart, daß zwischen dem motorseitigen Schalenelement 4 und dem halterseitigen Schalenelement 5 auf beiden Seiten des Außenumfangs jeweils ein vorgegebener Abstand eingehalten wird.

Die freiliegenden Außenumfangsbereiche des Schlauchabschnitts 2 liegen ungefähr auf einer Kreislinie um die Drehachse des Asynchronmotors 1. Um die beiden freiliegenden Umfangsbereiche des Schlauchabschnitts 2 in ungefähr umfangsmäßiger Ausrichtung zur Drehachse des Motors zu orientieren, ist das halterseitige Schalenelement 5 über einen Sockel 6 mit der Motorhalterung 3 verbunden, wobei die schräge Sockelfläche zur Ebene der Motorhalterung 3 einen Winkel von 45° einnimmt. Das motorseitige Schalenelement 4 ist so ausgerichtet, daß dessen tiefste Anlagefläche für den Schlauchabschnitt 2 ungefähr senkrecht zum Radius der Drehachse des Asynchronmotors 1 steht.

Wirkt auf den Asynchronmotor 1 ein Drehmoment durch Beschleunigen oder Abbremsen des Motors, so führt dies zu entsprechenden Kräften in Umfangsrichtung um die Drehachse des Asynchronmotors. Dadurch kommt es zu einer Verschiebung des motorseitigen Schalenelements 4 in Umfangsrichtung der Drehachse gegenüber dem halterseitigen Schalenelement 5. Diese tangentialen Kräfte werden im freiliegenden Bereich des Schlauchabschnitts 2 durch Scherung des Schlauchabschnitts 2 zwischen den Schalenelementen 4, 5 elastisch abgefedert und gedämpft, so daß keine Pendelschwingung auf die Motorhalterung 3 der Geschirrspülmaschine übertragen wird.

Das Gewicht des Asynchronmotors 1 wird bei dieser Anordnung durch eine Kraftübertragung in radialer Richtung von der Drehachse über die Schalenelemente 4, 5 auf den Sockel 6 übertragen. Durch die Anlage der Außenfläche des Schlauchabschnitts 2 an den Schalenelementen 4, 5 außerhalb des freiliegenden Bereichs wird die Belastung durch das Motorgewicht in Umfangsrichtung des Schlauchabschnitts 2 umgelenkt und so die radiale Scherung der Zylinderwand des Schlauchabschnitts 2 verhindert.

Bei dem in Fig. 1 und Fig. 2 dargestellten Ausführungsbeispiel wird der Asynchronmotor 1 durch zwei Schalenelementpaare 4, 5 gehalten. Dabei liegt der Schwerpunkt des Asynchronmotors 1 auf einer Verbindungslinie zwischen den beiden Schalenelementpaaren 4, 5, so daß durch das Zusammenwirken der Schalenelementpaare der Asynchronmotor 1 zentral unterstützt wird.

Die Zylinderlänge des Schlauchabschnitts 2 ist größer als die Tiefe der Schalenelemente 4, 5. Bei dem dargestellten Beispiel beträgt der Außendurchmesser des Schlauchabschnitts 25 mm, die Wandstärke 2,5 mm, die Länge 30 mm und die Härte 50 Shore. Die Tiefe der Schalenelemente 4, 5 ist 10 mm, so daß der Schlauchabschnitt 2 vorn und hinten (in Zeichenrichtung von Fig. 1) über die Schalenelemente 4, 5 heraus steht. Wie dargestellt, ist der Anlageradius ra des Schalenelements dem Außenradius des Schlauchabschnitts 2 angepaßt.

Bei einem anderen Ausführungsbeispiel (nicht dargestellt) wird der Schlauchabschnitt 2 mit den oben angegebenen Abmessungen in die Schalenelemente eingeklemmt und zu einem Oval verformt, indem der Anlageradius ra der Schalenelemente 4, 5 kleiner ist als der Außendurchmesser des Schlauchabschnitts (bei obigem Beispiel ist ra z.B. 9,75 mm). Dabei verläuft der freiliegende, verformte Zylindermantelbereich zwischen den Schalenelementen ungefähr geradlinig und beide freiliegende Bereiche verlaufen ungefähr parallel, so daß die Elastizität, d.h. Nachgiebigkeit, gegenüber den tangentialen Pendelkräften noch weiter erhöht ist.

Bei einer weiteren Ausführungsform kann der Anlageradius ra des Schalenelements geringfügig größer als der Außenradius des Schlauchabschnitts 2 sein. Dadurch wird bewirkt, daß der Schlauchabschnitt 2 nur im untersten Bereich der Schalenelemente 4, 5 unmittelbar anliegt und ein seitliches Spiel zwischen dem Schlauchabschnitt 2 und den Schalenelementen 4, 5 ist. Bei kleinen Auslenkungen bzw. Pendelmomenten gibt damit der Schlauchabschnitt 2 noch elastischer nach, während mit zunehmender tangentialer Auslenkung der Schlauchabschnitt'2 mit seinem Außenumfang an den Schalenelementen 4, 5 auch seitlich anliegt und dadurch die Dämpfung mit zunehmender Auslenkung zunimmt.

Fig. 2 zeigt die Höhenverstellung des Asynchronmotors 1 gegenüber der Motorhalterung 3. Der Abstand zwischen den beiden Sokkeln 6 wird durch das Zusammenschieben der beiden Sockel 6 verringert. Da der Abstand der motorseitigen Schalenelemente 4 beim Verschieben der Sockel 6 und der halterseitigen Schalenelemente 5 gleich bleibt, verformt sich der Schlauchabschnitt 2 zwischen den beiden Schalenelementen 4, 5 und es kommt zu einer Abnahme des Durchmessers des Schlauchabschnitts 2 in horizontaler Richtung und zu einer Zunahme des Durchmessers in vertikaler Richtung. Dadurch nimmt auch der vertikale Abstand der Schalenelemente des motorseitigen Schalenelements 4 zum halterseitigen Schalenelement 5 zu und der Asynchronmotor 1 wird durch Verringerung des Abstands zwischen den beiden Sokkeln angehoben. Die Höhenänderung des Motors 1 ist in Fig. 2 durch die beiden Pfeile angegeben, wobei der gestrichelte Pfeil die der Fig. 1 entsprechende Höhe des Asynchronmotors 1 darstellt und der durchgezogene Pfeil die Höhe des angehobenen Asynchronmotors 1.

Umgekehrt kann durch Vergrößerung des Abstands der Sockel 6 ausgehend von Fig. 1 der Motor entsprechend abgesenkt werden. Dadurch ist eine nachträgliche, flexible Höhenjustierung des Motors möglich, so daß die Motorwelle bzw. die an die Motorwelle angeschlossene Pumpe in der Geschirrspülmaschine an die vorgegebenen Anschlüsse angeschlossen werden kann.

Trotz der Höhenverstellung durch Verschieben der Sockel 6 bleibt der freiliegende Außenumfangsbereich des Schlauchabschnitts 2 in gleichem radialen Abstand zur Drehachse des Asynchronmotors 1, so daß die Pendelbewegung durch Änderung des Drehmoments des Asynchronmotors 1 weiterhin gedämpft werden kann.

### Bezugszeichenliste

- 1:: Asynchronmotor
- 2:: Schlauchabschnitt
- 3:: Motorhalterung
- 4:: motorseitiges Schälenelement
- 5:: halterseitiges Schalenelement
- 6:: Sockel

## Patentansprüche

1. Motorlagerung zum schwingungsdämpfenden Lagern eines Elektromotors, insbesondere eines Asynchronmotors, in einer Motorhalterung, wobei der Elektromotor (1) zumindest mittels eines elastischen Zylindermantelelements (2) mit der Motorhalterung (3) verbunden ist, an der Motorhalterung (3) für das Zylindermantelelement (2) ein halterseitiges Stützelement (5) angeordnet ist, das teilweise am Außenumfang des Zylindermantelelements (2) anliegt, am Elektromotor (1) für das Zylindermantelelement (2) ein motorseitiges Stützelement (4) angeordnet ist, das teilweise am Außenumfang des Zylindermantelelements (2) anliegt, und das Zylindermantelelement (2) durch das halterseitige Stützelement (5) und das motorseitige Stützelement (4) am Außenumfang so umfasst wird, dass zwischen den beiden Stützelementen (4, 5) auf beiden Seiten ein Teil des Außenumfangs freiliegt, **dadurch gekennzeichnet, daß** das halterseitige Stützelement (5) gegenüber dem motorseitigen Stützelement (4) verschiebbar ist.

2. Motorlagerung nach Anspruch 1, **dadurch gekennzeichnet, dass** zumindest je zwei halterseitige Stützelemente (5) und motorseitige Stützelemente (4) vorgesehen sind und die Stützelemente (4, 5) so ausgerichtet sind, dass die Achsen der darin lagernden Zylindermantelelemente (2) parallel verlaufen und der Abstand der halterseitigen Stützelemente (5) oder der motorseitigen Stützelemente (4) zu einander einstellbar ist.

3. Motorlagerung nach Anspruch 2, **dadurch gekennzeichnet, dass** eine Gerade durch die Mitte der beiden freiliegenden Außenumfangsbereiche eines jeden Zylindermantelelements (2) gegenüber der Richtung der Abstandsänderung geneigt ist.

4. Motorlagerung nach einem der Ansprüche 1 bis 3, **dadurch gekennzeichnet, dass** die freiliegenden Bereiche eines jeden Zylindermantelelements (2) auf einem Radius um die Drehachse des Elektromotors (1) liegen.

5. Motorlagerung nach einem der Ansprüche 1 bis 4, **dadurch gekennzeichnet, dass** die am Außenumfang anliegende Fläche des Stützelements (4, 5) kreisbogenförmig ist.

6. Motorlagerung nach einem der vorhergehenden Ansprüche, **dadurch gekennzeichnet, daß** das elastische Zylindermantelelement (2) ein Schlauchabschnitt ist.

## Claims

1. Motor bearing for vibration-damping mounting of an electromotor, in particular an asynchronous motor, in a motor support, wherein the electromotor (1) is connected to the motor support (3) at least by means of a resilient cylinder shell element (2), a holder-side supporting element (5) is arranged on the motor support (3) for the cylinder shell element (2) and rests partly on the outer periphery of the cylinder shell element (2), a motor-side supporting element (4) is arranged on the electromotor (1) for the cylinder shell element (2) and rests partly on the outer periphery of the cylinder shell element (2), and the cylinder shell element (2) is enclosed by the holder-side supporting element (5) and the motor-side supporting element (4) on the outer periphery so that a part of the outer periphery is exposed between the two supporting elements (4, 5) on both sides, **characterised in that** the holder-side supporting element (5) can be displaced with respect to the motor-side supporting element (4).

2. Motor bearing according to claim 1, **characterised in that** at least in each case two holder-side supporting elements (5) and motor-side supporting elements (4) are provided and the supporting elements (4, 5) are aligned so that the axes of the cylinder shell elements (2) being mounted therein run parallel and the distance of the holder-side supporting elements (5) or the motor-side supporting elements (4) from one another can be adjusted.

3. Motor bearing according to claim 2, **characterised in that** a straight line through the centre of the two exposed outer peripheral regions of any one cylinder shell element (2) is inclined with respect to the direction of the distance change.

4. Motor bearing according to one of claims 1 to 3, **characterised in that** the exposed regions of any one cylinder shell element (2) lie on a radius around the axis of rotation of the electromotor (1).

5. Motor bearing according to one of claims 1 to 4, **characterised in that** the surface of the supporting element (4, 5) resting on the outer periphery is like the arc of a circle.

6. Motor bearing according to one of the preceding claims, **characterised in that** the resilient cylinder shell element (2) is a tube section.

## Revendications

1. Support de moteur pour le montage avec amortissement des vibrations d'un moteur électrique, en particulier d'un moteur asynchrone, dans une fixation de moteur, où le moteur électrique (1) est relié au moins par un élément d'enveloppe cylindrique élastique (2) à la fixation de moteur (3), où est disposé à la fixation de moteur (3) pour l'élément d'enveloppe cylindrique (2) un élément de support (5) côté fixation qui s'applique partiellement au pourtour extérieur de l'élément d'enveloppe cylindrique (2), où est disposé au moteur électrique (1) pour l'élément d'enveloppe cylindrique (2) un élément de support (4) côté moteur qui s'applique partiellement au pourtour extérieur de l'élément d'enveloppe cylindrique (2), et que l'élément d'enveloppe cylindrique (2) est entouré par l'élément de support (5) côté fixation et l'élément de support (4) côté moteur au pourtour extérieur de façon que soit dégagée entre les deux éléments de support (4, 5) sur les deux côtés une partie du pourtour extérieur, **caractérisé en ce que** l'élément d'appui côté fixation (5) est déplaçable par rapport à l'élément d'appui (4) côté moteur.

2. Support de moteur selon la revendication 1, **caractérisé en ce qu'**au moins à chaque fois deux éléments de support (5) côté fixation et éléments de support (4) côté moteur sont prévus, et les éléments de support (4, 5) sont orientés de telle sorte que les axes des éléments d'enveloppe cylindriques (2) logés dans ceux-ci s'étendent parallèlement, et que l'écart des éléments de support (5) côté fixation ou des éléments de support (4) côté moteur est réglable entre eux.

3. Support de moteur selon la revendication 2, **caractérisé en ce qu'**une droite à travers le milieu des deux zones périphériques extérieures dégagées de chaque élément d'enveloppe cylindrique (2) est inclinée relativement à la direction de la modification d'écart.

4. Support de moteur selon l'une des revendications 1 à 3, **caractérisé en ce que** les zones dégagées de chaque élément d'enveloppe cylindrique (2) se situent sur un rayon autour de l'axe de rotation du moteur électrique (1).

5. Support de moteur selon l'une des revendications 1 à 4, **caractérisé en ce que** la face de l'élément de support (4, 5) s'appliquant au pourtour extérieur est configurée en arc de cercle.

6. Support de moteur selon l'une des revendications précédentes, **caractérisé en ce que** l'élément d'enveloppe cylindrique élastique (2) est une section de tuyau.
